# EUROPEAN PATENT SPECIFICATION

(11) **EP 0 477 252 B1**
(45) Date of publication and mention of the grant of the patent: **29.09.1993**
(21) Application number: 90909551.5
(22) Date of filing: 07.06.1990
(51) Int. Cl.: H01M 10/42, H01M 10/00, H01M 2/02, H01M 2/20

(54) **SWITCHED DUAL BATTERY SYSTEM**
UMSCHALTBARES DOPPELBATTERIESYSTEM
SYSTEME A DEUX BATTERIES COMMUTABLES

(30) Priority: 12.06.1989 US 365084; 31.01.1990 US 472908
(43) Date of publication of application: 01.04.1992
(73) Proprietor: GLOBE-UNION INC., Milwaukee WI 53209 (US)
(72) Inventor: KLEBENOW, Alan, J., Brookfield, WI 53005 (US); DOUGHERTY, Thomas, J., Waukesha, WI 53186 (US); MROTEK, Edward, N., Grafton, WI 53024 (US); THUERK, David, A., Brookfield, WI 53005 (US); MICHAUD, Maurice, G., Mequon, WI 53092 (US)
(74) Representative: UEXKÜLL & STOLBERG
(86) International application number: US9003241
(87) International publication number: WO9016090

(56) References cited:
- EP-A- 0 023 280
- EP-A- 0 093 789
- FR-A- 2 114 888
- FR-A- 2 427 695
- LU-A- 67 785
- US-A- 1 924 959
- US-A- 3 165 689
- US-A- 3 475 221

## Description

This invention relates to rechargeable battery systems, particularly for vehicles, including a main battery and a reserve battery.

### Background and Technical Problems

Vehicle battery systems having a main and a reserve unit, separated by a diode for maintaining the reserve unit in a charged condition during non-use, are generally known. See U.S. Patent No. 4,239,839. The diode allows current to flow from the vehicle generator into the reserve battery, but prevents the reserve battery from discharging through the current path including the diode. However, diodes have limited current carrying capacity. Diodes having a relatively low current carrying capacity may be blown if excessive current is driven therethrough, whereas diodes having higher current ratings typically dissipate correspondingly large amounts of heat which can cause problems in a battery environment.

A switchable dual battery provided by Pacific Dunlop of Australia comprises a stack of thin, flat, parallel electrode plates. A first portion of the plates comprises the main battery and a second, adjacent portion parallel to the first portion comprises the reserve battery. The two batteries are electrically configured in parallel, with a one-way diode disposed therebetween to prevent the reserve unit from discharging during periods of non-use. A manually operable switch is interposed between the two batteries, in parallel with the diode, to bypass the diode when it is desirable to discharge the reserve unit. If the switch is left closed, the reserve unit will discharge along with the main unit, impairing the ability of the reserve unit to function as an auxiliary battery. When the switch is open, on the other hand, the diode may be blown if excessive current is drawn therethrough during charging of the reserve battery.

A power reserve battery system, bearing the name DELCO POSIPOWER, has been used in certain 1985 automobiles. The battery housing has three external terminals extending from the cover: a main battery positive terminal; a reserve (starter) battery positive terminal; and a common negative (ground) terminal. Thus, the vehicle requires three cables to accommodate the POSIPOWER system. The cable from the positive terminal of the reserve battery is connected to a solenoid which is activated during starting. The solenoid and starting circuit are located in a control box remote from the battery housing. Each time the ignition key is turned to the "start" position, the main battery latches the solenoid to bring the reserve battery into parallel with the main battery. When the cranking cycle is complete, the solenoid unlatches, again isolating the reserve battery. In the event the main battery lacks sufficient power to energize the latching solenoid, a bypass system, located in the control box, may be manually activated to access power from the reserve battery.

The performance of these battery systems has been unsatisfactory. Retrofitting vehicles to accommodate different sized battery housings, different terminal configurations, or remote circuitry is often cost prohibitive. System reliability may be impaired if diodes with insufficient current-carrying capacity are employed, whereas safety and performance are compromised when high current capacity diodes are used because of the excessive heat generated thereby. Moreover, presently known dual battery configurations do not permit disposition of two batteries, each capable of delivering sufficient power to start a vehicle, within a housing defined by a conventional vehicle battery envelope and having terminal locations designed to accommodate conventional vehicle cable configurations.

### SUMMARY OF THE INVENTION

The switched dual battery system of the invention provides a main battery in selective electrical contact with a reserve battery, the system being disposed within a housing which can have conventional external dimensions and wherein the terminals are disposed to accommodate conventional vehicle cable configurations. The housing has a series of internal walls that define the main and reserve cells, and a partition wall that isolates the main and reserve cells from each other. In a preferred embodiment, individual cells of the main battery are perpendicular to some or all of the reserve cells.

In accordance with another aspect of the invention, a switch is also disposed within the cover and includes a manually operable actuator for selectively establishing conatct between the main and reserve batteries. A one-way diode, in parallel with the switch, prevents the reserve battery from discharging when the switch is open, but allows current to pass through the diode to maintain the reserve battery in the charged state. A variable resistor is disposed in series with the diode to limit the amount of current flowing therethrough, and, hence, the amount of heat generated by the diode.

### BRIEF DESCRIPTION OF THE DRAWINGS

In the drawings, like numerals denote like elements, and:
Figure 1 is perspective view of a dual battery of the invention, shown with the switching mechanism removed;
Figure 2 is a perspective view of the battery container shown in Figure 1;
Figure 3 is a top view of the container of Figure 2 showing two sets of exemplary battery cell elements hard-wired together;
Figure 4 is an enlarged cross-sectional view of a vent cap shown in Figure 1;
Figure 5 A is a perspective view of a jumper in accordance with the invention;
Figure 5 B is a top view of the jumper of Figure 5A, shown in the switch cavity in the battery cover;
Figure 6 is a perspective view of the switch mechanism in accordance with the invention;
Figure 7 is a top plan view of the switch mechanism shown in Figure 6;
Figure 8 A is a cross-sectional view of the switch mechanism taken along line VIIIA-VIIIA in Figure 7;
Figure 8B is an end view of the switch mechanism taken along line VIIIB-VIIIB in Figure 7;
Figure 9 is a top plan view of the battery of Figure 1 with the switch mechanism installed;
Figure 10 is a cross-sectional view of the cover taken along line X-X in Figure 9, with the vent caps removed;
Figure 11 is a cross-sectional view taken along line XI-XI in Figure 9;
Figures 12A-12C are schematic diagrams of alternative termination and cell configurations according to the invention;
Figure 13 is a schematic circuit diagram of system electronics in accordance with the invention, shown in the battery discharge condition; and
Figure 14 is the circuit of Figure 13, shown in the battery recharge condition.

### DETAILED DESCRIPTION OF EXEMPLARY EMBODIMENTS

In one embodiment of a switched emergency battery system of the invention, the main and reserve units each comprise a lead-acid battery. A lead-acid battery comprises of a number of cells disposed in a container. A series alternating positive and negative electrodes (plates), having separators sandwiched therebetween, are disposed in each cell. Individual cells of both the main and reserve batteries may suitably comprise 1.4% lead-antimony alloy (i.e., 1.4% antimony) for the grid of the positive plates and 0.1% lead-calcium alloy (i.e., 0.1% calcium) for the grid of the negative plates. The main and reserve batteries may comprise dissimilar chemistries employing dissimilar lead alloys, as desired, depending on the specific operating conditions of the batteries and/or the vehicle in which they are used.

For a lead-acid battery, the voltaic potential is approximately two volts per cell regardless of cell volume. In automotive batteries, vehicles manufactured by original equipment manufacturers (OEM vehicles) typically require a twelve volt battery. Thus, each main and reserve battery of the invention advantageously comprises six cells (6 cells x 2 volts/cell = 12 volts).

OEM vehicles are configured for a battery having a conventional envelope, i.e., the external dimensions of a battery are appropriately compatible with the space ("envelope") provided for battery disposition within an OEM vehicle. In a dual battery, two sets of six cells must be disposed within a standard envelope such that, for each cell, the number of plates per cell is minimized and the current carrying capacity is maximized. From a production standpoint, the main and reserve batteries should have the same number of plates per cell.

The main battery should have sufficient cold crank amp (CCA) output, for example 525 amps for a 30 second start cycle, to accommodate most OEM vehicles in the class for which the battery is designed. The amount of current (CCA) produced by a two volt cell is a function of the combined surface area of all plates within the cell. Thus, the aggregate plate surface area per main battery cell may be determined once a design CCA is established for the main battery. To the extent that a battery generally may not be charged beyond the point at which the lowest current carrying cell (the limiting cell) is charged, it is also desirable for each cell to have approximately the same current capacity (plate surface area). The number of plates per cell and the plate dimensions will depend on the size and disposition of the reserve battery relative to the main battery. An additional design consideration is the environment within which the vehicle will be operated. Fewer and thicker plates may be used in warmer climates where a lower CCA output is required and susceptibility to plate corrosion is greater than in cooler climates.

The number of plates comprising each main and reserve cell, and the dimensions (height, width, and thickness) of each main and reserve plate must then be determined. The reserve battery is subject to relatively few cycles during its life and, thus, the relatively thick plates typically associated with high cycle main batteries are not always needed in the reserve battery.

Battery production may be streamlined by manufacturing an equal number of main and reserve plates. In addition, the total number of plates used in each cell should be minimized to reduce total cost. For example, each cell may contain from 6 to 15 plates. Preferably, plates including six positive electrodes and five negative electrodes are employed in each cell of each battery.

Taking all the above factors into account, it has been discovered that an optimum ratio of main to reserve CCA output is achieved when the reserve battery is disposed orthogonal to the main battery. Alternatively, the main and reserve plates may be in parallel disposition, or in any other convenient relationship, such the respective numbers of main and reserve plates per cell, in conjunction with the respective plate thicknesses, yield the desired main and reserve CCA output.

In the dual battery of the invention, the term "reserve battery" refers to a low-cycle, auxiliary battery for intermittent use. A "termination" as used herein describes an electrical contact associated with a battery element located at an end of a battery element. The main and reserve batteries each have a positive termination at one end thereof and a negative termination at the opposite end. Terminations which extend through the battery housing for attachment to a load are referred to as terminals. Each battery terminal may have one or more terminations associated therewith for carrying current to or from the battery.

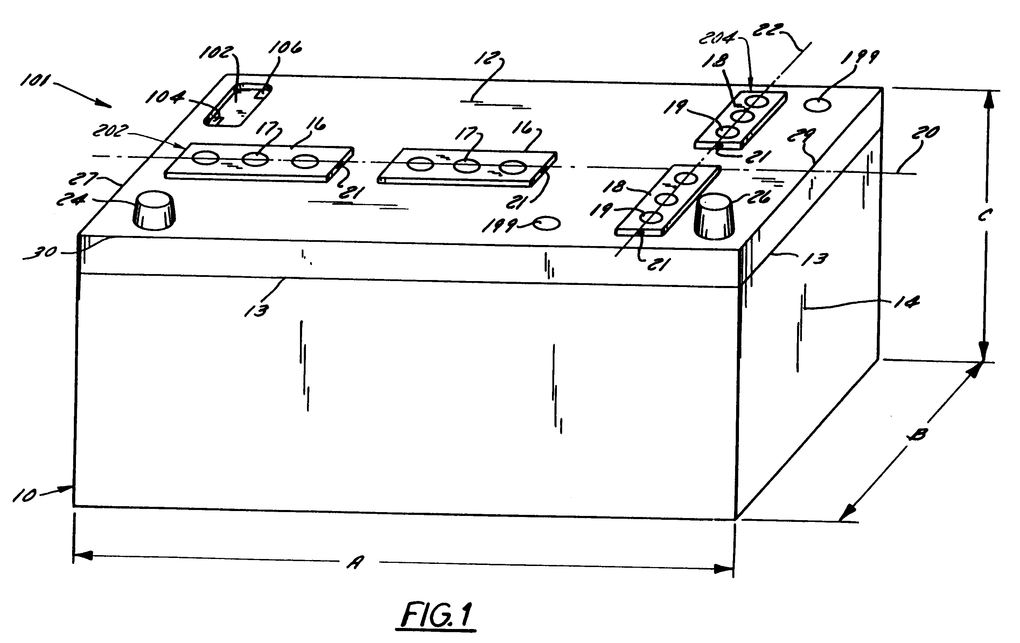

Referring to Figures 1-3 and 9, a switched dual battery 101 of the invention comprises a main battery 202 and a reserve battery 204 disposed in a housing 10. Housing 10 includes a cover 12 and a container 14 joined along a line 13 during manufacture of the battery, for example by heat sealing. Container 14, which has an open upper end and is generally rectangular, comprises a bottom wall 6, a pair of elongated side walls 7, a pair of short side walls (end walls) 8, a partition wall 34, and respective main and reserve internal cell walls 36, 40. Wall 34 spans side walls 7 and divides the container into a main battery portion 11, including a plurality of main battery compartments (cells) 38, and a reserve battery portion 23, including a plurality of reserve battery cells 42.

Housing 10 is suitably made from a resilient, heat-resistant plastic such as polyethylene. The plastic should be strong, light, and capable of being heat sealed or vibration welded, or compatible with epoxies or solvents. Walls 34, 36, 40 are preferably integral with container 14 and made of the same material.

A main battery element 37 is disposed within each cell 38 for electrochemical interaction with the main battery electrolyte. Reserve battery elements 41 are similarly disposed within each cell 42. Each of elements 37, 41 comprises an alternating series of positive and negative electrodes (plates) 35, 31 having separators (not shown) interposed therebetween.

Main battery 202 is disposed along a centerline 20 such that respective main battery plates 35 in each main battery cell are disposed parallel to each other and perpendicular to main centerline 20. Centerline 20 coincides with the lengthwise axis of housing 10. Cells 14 of reserve battery 204 are perpendicular to a reserve centerline 22, reserve centerline 22 being substantially perpendicular to main centerline 20. Perpendicular orientation of the main and reserve batteries provides optimum space utilization within the rectangular envelope defined by battery housing 10.

A positive main battery terminal 24 extends from the upper surface of cover 12, along a longitudinal edge 30 near one corner thereof, for attachment to the positive battery cable of a vehicle. Along the same longitudinal edge 30 of cover 12, a negative terminal 26 of the reserve battery extends upwardly through cover 12 for attachment to a negative battery cable. A negative battery termination 28 of the main battery is disposed along edge 30 of cover 12, but does not protrude therefrom. Similarly, a positive termination 32 of the reserve battery, disposed along an edge 29 of cover 12, does not protrude therefrom.

A conductive bus bar 48 connects main battery negative termination 28 to reserve battery negative terminal 26. Thus, electrical contact may be established between both batteries and the vehicle electrical system through terminals 24, 26. Respective burn caps 199 are sealed to cover 12 over terminations 28, 32 after bus bars 48, 46 are secured to the terminations, for example, by welding.

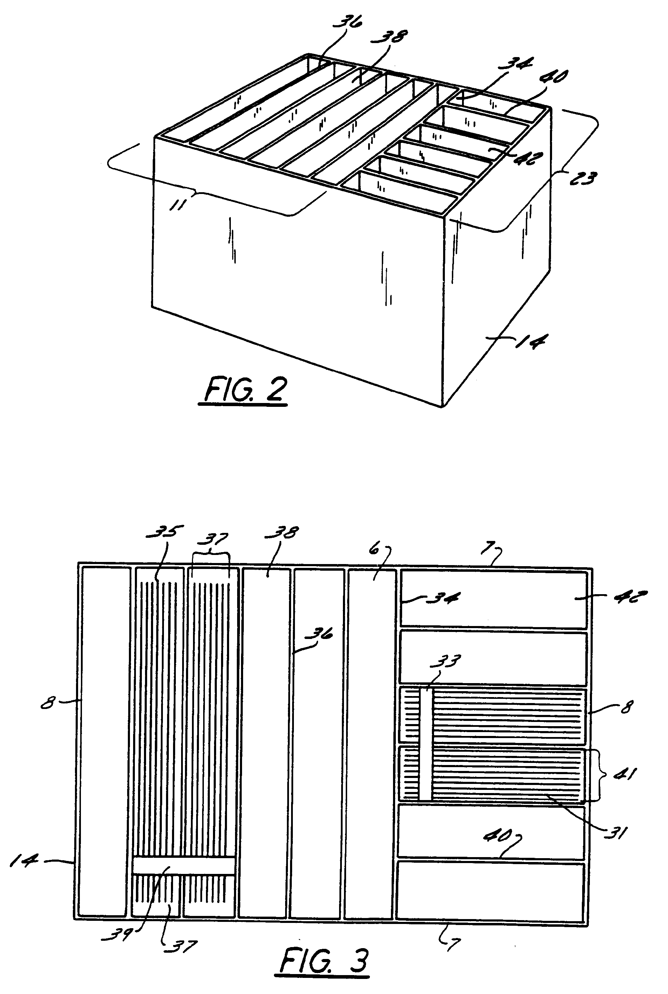

Referring to Figures 2, 3, and 9-11, container 14 is divided into two separate battery chambers by wall 34. To the left of wall 34, a plurality of thin, flat, spaced internal walls 36 define main cell compartments 38 therebetween. Respective main and reserve battery inlets 52, 54, integral with cover 12, are disposed above and extend into each cells 38, 42 to facilitate electrolyte filling. To the right of wall 34, reserve cell walls 40 similarly define a series of reserve cell compartments 42 therebetween. Each reserve wall 40 forms a T-shaped juncture with partition wall 34. The reserve electrolyte may be the same as or different from the electrolyte of the main battery, since the two batteries are isolated by wall 34.

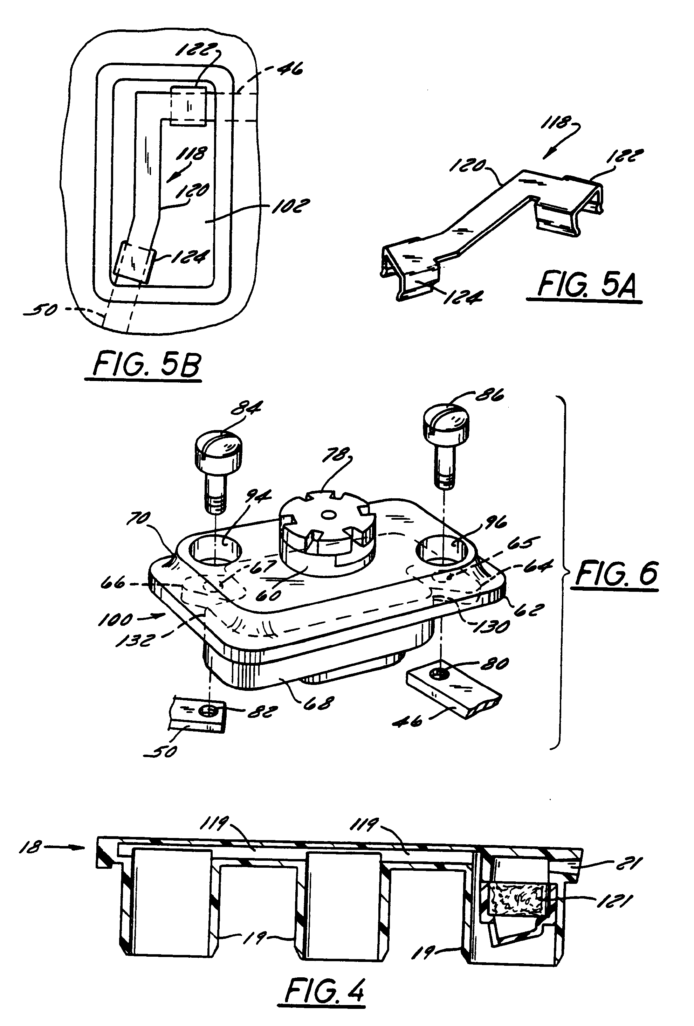

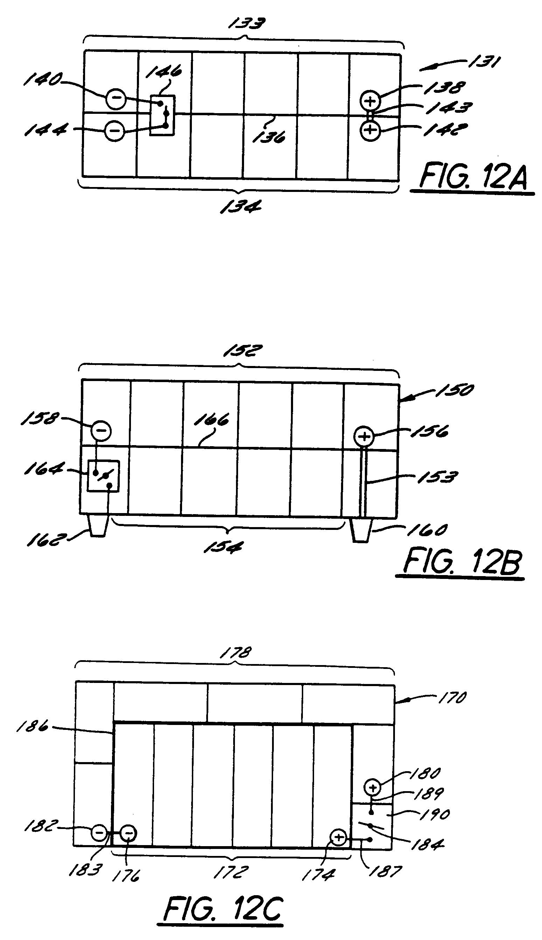

In Figures 4 and 11, vent cap 18 includes three integral vent covers 19 each disposed in a fill hole inlet 54. Adjacent covers 19 are connected by a common manifold 119 which terminates at an aperture 21. Cap 18 is configured to minimize the possibility of electrolyte leakage from a cell to the environment. Each cell communicates with the environment through manifold 119 and aperture 21, thereby preventing excessive pressure within the battery resulting from, for example, gas generation due to overcharging or self discharging or changes in temperature. A flame protection device 121, such as a microporous polyethylene disk, is mounted in an endmost cover 19 near aperture 21 to prevent a flame from entering the battery through aperture 21. Main vent caps 16 cooperate with main battery inlets 52 in a similar manner.

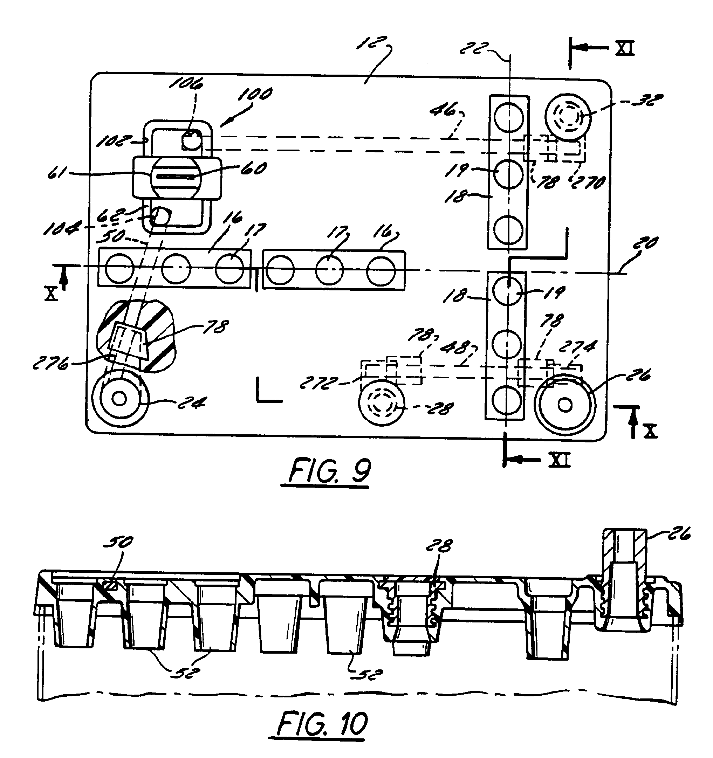

In Figures 9-11, cover 12 has various elements of the battery electronics molded within it. Prior to manufacture of cover 12, each termination is joined to a conductive bus bar for carrying current to and from the termination. Specifically, a conductive extension 270 of termination 32 is formed around one end of a first bus bar 46, for example by placing the end of the bus bar in a mold or die and introducing molten or softened lead thereinto. In a similar manner, a conductive extension 274 of termination 26 is formed around one end of a second bus bar 48, and an extension 272 of termination 28 is formed about the opposite end of bus bar 48. One end of a third bus bar 50 is joined to an extension 276 of termination 24, the opposite end of bus bar 50 being disposed within a switch mechanism 100, as discussed below. Switch 100 also receives the end of bus bar 46 remote from termination 32. Negative termination 28 of the main battery and positive termination 32 of the reserve battery are recessed beneath the upper surface of cover 12.

Bus bars 46, 48 and 50 are suitably rectangular in cross-section and are preferably made from a highly conductive material such as copper. Ohmic losses within the battery are thus minimized, providing maximum voltaic potential to the load. Inasmuch as copper is generally incompatible with acidic electrolyte, the bus bars are advantageously isolated from the electrolytic environment by being embedded within cover 12 during manufacture, for example, by an injection molding process.

Referring now to Figures 1 and 6-9, a switch 100, configured for disposition within a switch cavity 102 in cover 12, comprises a manually operable switching mechanism 60 rotatably mounted on a switch housing 62. Alternatively, manual switch mechanism 60 may be a toggle switch, a push button, or any other convenient mechanism, such as a remotely actuable solenoid or SCR. Switch housing 62 suitably comprises a seat member 68 joined to a cover 70. An elastomeric O-ring 72 is disposed about the periphery of seat 68 near the junction between seat 68 and cover 70. O-ring 72 protects the switching contacts and bus bars 46, 50 from contamination. Seat 68 has two diagonally opposed indentations 130, 132 which allow respective ends of bus bars 46 and 50 to be connected to the switch contacts when switching mechanism 100 is installed within cover 12.

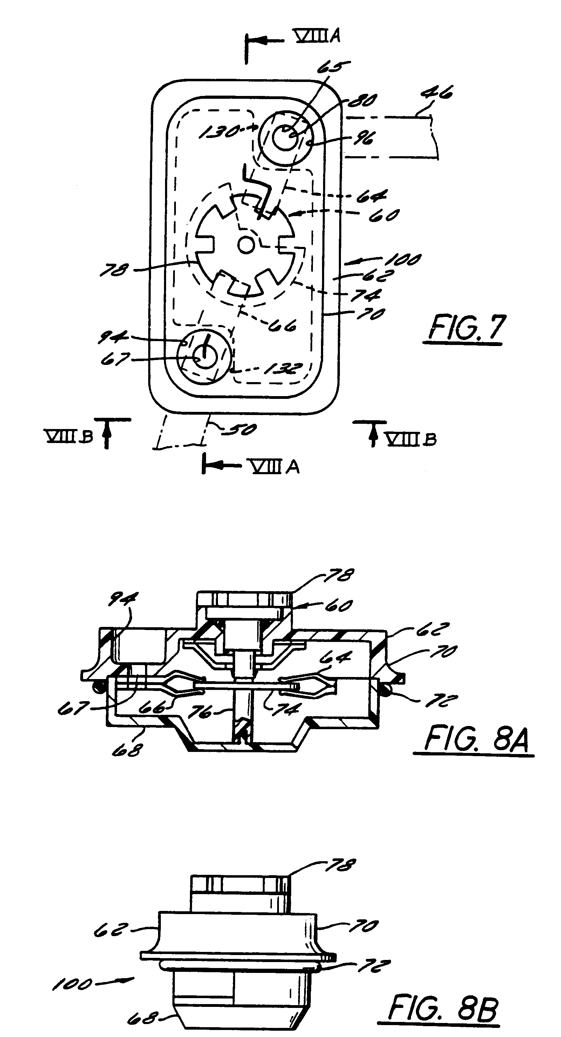

Respective first and second switch contacts 64, 66 are disposed for engagement with respective ends of bus bars 46, 50. An actuator 78 is disposed at a first end of a rotatable shaft 76, the opposite end of which is mounted on seat 68 (Figure 8A). A conductive plate 74 is mounted on shaft 76 for rotation therewith. Plate 74 is slidably engageable with switch contacts 64, 66, such that plate 74 maintains mechanical and electrical contact with contact 66 throughout the permitted range of rotation of shaft 76. Plate 74 is contoured so that it engages contact 64 only in the switched on position of switch 100. Mechanical and electrical contact between plate 74 and contact 64 is terminated when manual actuator 78, through an external handle 61 mounted thereon, is rotated to the off position.

In Figure 6, screw holes 80, 82 near the ends of bus bars 46, 50 allow attachment to contacts 64, 66 of switch 100. During assembly, switch housing 62 is inserted into switch cavity 102 in cover 12 so that holes 65, 67 are aligned with respective holes 80, 82. Indentations 130, 132 of seat 68 allow manipulation of contacts 64, 66 into registration with bus bars 46, 50. A screw 84 is inserted through a clearance hole 94 in cover 70 of the switch housing, guided successively through holes 67, 82, and secured in a mounting hole 104 at the bottom of cavity 102 (Figure 1). Similarly, a screw 86 is guided through a clearance hole 96 in cover 70, holes 65, 80, and secured in a mounting hole 106 in cover 12. Electrical contact is thereby established between bus bar 46 (and hence the reserve battery) and switch 100, as well as between bus bar 50 (and hence the main battery) and switch 100.

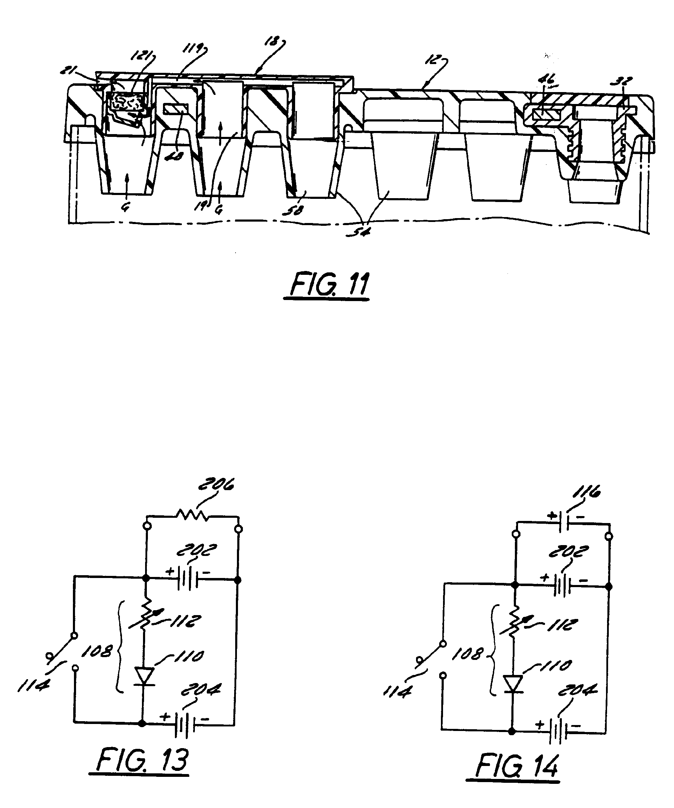

Referring now to Figure 13, an electric circuit of battery 101 comprises reserve battery 204 disposed in parallel with main battery 202 for delivering power to a load 206, for example, the starter mechanism of an automobile. A unidirectional current path 108 suitably comprises a diode 110 and an overcurrent protection device 112, suitably a variable resistor, polyswitch, solid state transistor, thyristor, or any device which selectively limits current through the diode. Preferably, variable resistor 112 comprises a positive temperature coefficient (PTC) resistor. The resistivity of resistor 112 changes dramatically as a function of temperature, or more particularly, of power dissipation, since resistor 112 radiates heat as a function of power passed therethrough. A shunt current path 114, including switch 100, is disposed in parallel with unidirectional current path 108. Path 108 acts as a protective charge maintenance circuit which allows a low level current to pass from the vehicle generator to reserve battery 204. At the same time, circuit 108 prevents current from flowing in the opposite direction, thereby maintaining reserve battery 204 in the charged condition during non-use.

Figure 13 corresponds to the discharge mode, that is, when main battery 202 is supplying power to the vehicle. During normal starting conditions in which the voltaic potential of main battery 202 is sufficient to deliver adequate current to load 206, path 114 remains open and diode 110 prevents current flow from reserve battery 204 to load 206. Thus, reserve battery 204 is effectively isolated from the circuit during discharge mode when switch 110 is open. When battery 202 becomes drained, for example, through excessive cranking cycles, or if vehicle accessories are used when the vehicle generator is not running, shunt path 114 may be manually switched to the closed position, thereby bypassing unidirectional current path 108 and allowing the voltaic potential of battery 204 to be applied across load 206. After the vehicle has been started, switch 110 is opened to prevent inadvertent drain of battery 204.

Referring to Figure 14, a voltage source 116, such as the generator/alternator system of the vehicle, is disposed across the output terminals to supply a positive potential to batteries 202 and 204, thereby recharging them. In charge mode, when switch 110 is closed, batteries 202, 204 will simultaneously recharge in accordance with their respective voltaic potentials. Shunt path 114 provides essentially zero electrical resistance, so that no current flows through unidirectional current path 108. When shunt path 114 is open, voltage source 116 causes current to flow downwardly through unidirectional current path 108 to recharge battery 204. Variable resistor 112 is in series with diode 110 to limit the amount of current flowing through the diode.

Diodes generate a significant amount of heat as current flows therethrough. In a battery environment, sources of excessive heat are undesirable because battery housings and vehicle electrical cables are often made from plastic or rubber. Moreover, the electrolyte may produce volatile gases under certain conditions, for example, during self-discharge.
Therefore, a mechanism is needed for keeping the temperature of diode 110 within desired limits. Resistor 112 effectively limits the amount of current which travels through path 108 and thus minimizes heat generation by diode 110 while supplying sufficient recharge current, for example 0.1-2 amps, to the reserve battery. Resistor 112 and diode 110 are sufficiently small to fit within cavity 102 in cover 12.

A desirable voltage-current relationship for circuit 108 is one wherein current flow increases substantially linearly with voltage up to a predetermined threshhold voltage, and then levels off or decreases with further voltage increases. A threshold in the range of 1.2-1.3 V which limits current to a maximum less than 1 amp is preferred. Since vehicle batteries undergo extended periods of recharging during vehicle operation, a low current through path 108 is sufficient to charge battery 104. A voltage differential of about 0.1 to 60 volts, more particularly about 0.2 to 2.5 volts, is maintained across path 108 when switch 114 is open. Resistor 112 has a resistance of about 0.1 to at least 5 ohms at low voltage levels. This results in current levels in the range of about 0.1 to 25 amps, particularly 0.3 to 3 amps, through path 108 to recharge battery 104.

Manufacture of a dual battery according to the invention begins with a mold corresponding to cover portion 12. A conductive linking apparatus is disposed within the mold prior to the injection of plastic. The conductive linking apparatus suitably comprises bus bars 46, 48, 50, terminations 28, 32, and terminals 24 and 26 (Figures 1 and 9-11). Respective extensions 270, 272, 274 and 276 configured about ends of bus bars 46, 48, and 50 are enclosed within respective corrosion resistant plastic sleeves 78 (Figure 9). Sleeves 78, made of chlorinated polyolefin, protect the connections between the bus bars and lead extensions from inadvertent contact with electrolyte. Copper bus bars may exhibit different thermal expansion characteristics than the cover, container, terminations, terminals, and lead extensions, and thus the bus bars are permitted to slide freely within cover 12.

After the linking apparatus is inserted into the mold, plastic is injected to form cover 12 with the linking apparatus embedded therein. Container 14 is suitably made by separately injection molding. After a predetermined cooling time, the cover is removed from the mold and a highly conductive jumper 118 is inserted into switch cavity 102.

Referring to Figures 5A and 5B, jumper 118 suitably comprises an L-shaped plate 120 having respective spring clips 122, 124 disposed at respective opposite ends thereof. When jumper 118 is inserted into cavity 102, clips 122, 124 removably engage bus bars 46, 50. Jumper 118 temporarily maintains an electrical connection between the two batteries during initial charging. Switch mechanism 100 can thereby be installed into an otherwise completed battery (Figure 1) without having to withstand the manufacturing process.

After jumper 118 is secured in place, cavity 102 may be covered with protective tape to prevent debris from entering the cavity. In this condition, the cover is ready to be joined to a container, there being a complete electrical circuit within cover 12 by virtue of the contact made between bus bars 46 and 50 via jumper 118.

Prior to joining cover 12 to container 14, battery elements 37, 41 are inserted into the main and reserve battery cells 38, 42. For purposes of illustration, two exemplary main and reserve battery elements 37, 41 are shown in Figure 3; however, it will be understood that an element is disposed in each cell of each battery during assembly. Thus, twelve elements are placed into the twelve cells of container 14. Each element 37, 41 preferably has a positive electrode plate at both ends, such that every element has an odd number of plates (positive and negative electrodes). Preferably, each element 37, 41 has six positive and five negative electrodes, for a total of eleven plates.

All of the positive plates within a particular cell are electrically connected in parallel, forming a current bus, by a wire extending from each positive plate. Each negative plate within a particular cell is similarly connected to every other negative plate within the same cell. Thus, two current busses, one positive and one negative, extend from each cell. The negative current bus of each cell is hard wired to the positive current bus of an adjacent cell, forming a series of hard wired connections 33, 39 which extend over the tops of walls 36, 40. Hard wiring establishes a permanent current path between adjacent elements by twisting, soldering, crimping, welding, or fusing the current busses together. A total of ten connections 33, 39 are made within container 14, five within each of the batteries 202, 204.

The end cell at one end of each battery includes a free positive current bus, and the end cell at the opposite end of the battery includes a free negative current bus. These are fused to the corresponding negative and positive terminations in cover 12 when cover 12 is joined to container 14 by resistance heating, friction welding, a torch, swage, or crimp. Preferably, the current buses are joined to the corresponding terminations after the battery elements are placed within the battery cells. Heat is thereafter applied to terminals 24 and 26, which extend from cover 12, and to terminations 28 and 32, which do not extend through cover 12, through access openings. Access hole covers (burn caps) 199 are thereafter sealed to cover 12 to conceal respective terminations 28 and 32.

Cover 12 is sealed to container 14 by any convenient method, for example, heat sealing or vibration welding. The battery is then filled with aqueous electrolyte. All twelve inlets 52, 54 may be simultaneously filled by immersing housing 10 in an aqueous electrolyte bath. The protective tape covering cavity 102 (discussed above) protects the contents of the cavity from the acidic electrolyte. If different chemistries are used in the respective batteries, one set of inlets may be temporarily sealed off while the other is left open in a two-stage immersion process.

Upon filling the battery with electrolyte, respective vent caps 16, 18 are secured to cover 12. The dual battery 101 then resembles a conventional battery having two external terminals. Jumper 118 causes the dual battery to function as a single battery. Accordingly, the battery may be formed (initially charged) in accordance with conventional formation techniques. After formation, jumper 118 is removed, and switch 100 is inserted into cavity 102. Switch contacts 64, 66 and respective bus bars 46, 50 are connected by conductive screws 84, 86.

The dimensions, configuration, and terminal locations of battery housing 10 are preferably comparable to conventional single battery housings. Terminals 24 and 26 may be disposed immediately adjacent to edge 30. For example, the length (dimension A in Figure 1) of housing 10 is generally 20.3 to 30.8 cm, especially 26.2 cm. The corresponding width (dimension B) is preferably 12.7 to 20.3 cm, especially 17.5 cm. The height (dimension C) is 12.7 to 22.9 cm, particularly 17.8 cm. The distance between the centers of terminals 26, 28 is about 17.8 to 27.9 cm, particularly 22.6 cm. Efficient utilization of space within such a conventional battery housing envelope allows the main battery to exceed SAE recommended minimum CCA output ratings for most OEM vehicles, for example, a thirty second start cycle at 0°C, while allowing the reserve unit to provide sufficient CCA output for a plurality of start cycles each in the range of approximately ten seconds.

Figures 12A-C illustrate alternative battery configurations in accordance with the invention. In Figure 12A, a dual battery 131 suitably comprises a main battery 133 having a main positive terminal 138 and a main negative terminal 140. A wall 136 isolates main battery 133 from a reserve battery 134 which includes reserve positive termination 142 and a reserve negative termination 144. A bus bar 143 connects main positive terminal 138 to reserve positive termination 142. A switch 146 is disposed between terminal 140 and termination 144, and hence between main battery 133 and reserve battery 134. Terminals 138 and 140 extend through the battery housing.

In Figure 12B, a dual battery 150 comprises a reserve battery 152, including reserve positive termination 156 and reserve negative termination 158, separated by a wall 166 from a main battery 154, including a main positive terminal 160 and a main negative terminal 162. A bus bar 153 connects main positive terminal 160 to reserve positive termination 156. A switch 164 is disposed between reserve negative termination 158 and main negative terminal 162. Respective main terminals 160, 162 extend from a side of battery 150. In both embodiments of Figures 12A and 12B, the main and reserve cells are parallel, rather than perpendicular, to each other.

Referring now to Figure 12C, a dual battery 170 suitably comprises a main battery 172, including main battery positive termination 174 and main battery negative termination 176, and a reserve battery 178, including reserve battery positive termination 180 and reserve battery negative termination 182. A U-shaped partition wall 186 isolates the reserve and main batteries, and the cells of reserve battery 178 are disposed end-to-end in a U-shaped configuration outside of wall 186. A bus bar 183 connects respective main and reserve negative terminations 176, 182. A switch 184 is connected to terminations 174, 180 by respective bus bars 187, 189. This configuration has the same advantages as the one shown in Figures 2-3, and also allows the positive and negative terminations of each battery to be in close proximity to each other, minimizing the length of the necessary electrical connections (bus bars 183, 187, 189). This arrangement further provides a rectangular space 190 within the container in which the mechanism of switch 184 can be installed.

Other arrangements are, of course, possible, For example, the main and reserve batteries could be disposed side-by-side with all cells in parallel, or the main battery could be divided into two sections on opposite sides of the reserve.

An advantage of the invention is that the main battery can produce more than 400 cold crank amps (CCA), particularly at least 525 CCA, with sufficient room within a conventional battery housing envelope for a reserve battery capable of producing between 200 and 400 CCA, particularly at least 275 CCA. These CCA values are predicated upon worst case design conditions, and correspond to a 7.2 volt baseline potential. The ability to dispose two batteries within a conventional housing envelope is largely a function of the relative orientation of the two batteries. The perpendicular disposition of the reserve battery relative to the main battery, with preferred embodiments, impares the voltage ratio between the main and reserve batteries obtainable within the operating envelope.

The dual battery of the invention is installed in a vehicle and connected to the battery cables in a conventional manner. In an emergency situation wherein the main battery output is too low to start the vehicle, the operator manipulates the switch to the closed position, thereby bringing the reserve battery, which is maintained in the fully charged state by the diode/variable resistor circuit, into parallel with the main battery. Upon starting the vehicle, the operator opens the switch, preventing further drain from the reserve battery. The main battery is recharged during vehicle operation, and the reserve battery is also recharged, at a slower rate, through the diode/variable resistor circuit.

## Claims

1. A dual battery including a main battery (202) and a reserve battery (204), a pair of positive and negative terminals (24, 26) for connecting the main and reserve batteries (202, 204) to an external load, and a switch (100) for connecting and disconnecting the reserve battery (204) from electrical contact with the terminals (24, 26), characterised in that:
the main and reserve batteries (202, 204) are disposed in a elongated plastics container (14) having a bottom wall (6), a plurality of side walls (7, 8), an open upper end, a first series of spaced internal cell walls (36) for defining a series of main cell compartments (38), a second series of internal cell walls (40) for defining a series of reserve cell compartments (42), and a partition wall (34) for isolating the main cell compartments (38) from the reserve cell compartments (42);
a plastics cover (12) fits over and is secured to the open upper end of the container (14);
a series of main battery elements (37) each comprising a plurality of battery plates (35, 31) are disposed in each of the main cell compartments (38);
first intercell electrical connectors (39) join each of the main battery elements (37) in series;
a series of reserve battery elements (41) each comprising a plurality of battery plates (35, 31) are disposed in each of the reserve cell compartments (42);
second intercell electrical connectors (33) join each of the reserve battery elements (41) in series;
a main pair of positive and negative terminations (24, 28) are disposed near opposite ends of the series of main cell compartments (38);
a reserve pair of positive and negative terminations (32, 26) are disposed near opposite ends of the series of reserve cell compartments (42);
electrical connectors (46, 48, 50) connect the negative terminations (28, 26) of the main and reserve batteries (202, 204) to the negative terminal (26) and the positive terminations (24, 32) of the main and reserve batteries to the positive terminal (24), the electrical connectors (46, 48, 50) being embedded within the battery cover (12); and
the switch (100) selectively interrupts one of the electrical connectors (46, 48, 50) and is disposed on the battery cover (12).

2. The battery of claim 1, further characterised in that some or all of the reserve battery cell compartments (42) and reserve battery elements (41) are substantially perpendicular to the main battery cell compartments (38) and main battery elements (37).

3. The battery of claims 1 and 2, further comprising a charge circuit (108) bypassing the switch (100) for charging the reserve battery (204) at the same time as the main battery (202) is charged when the switch (100) is open, including a device (112) for limiting the amount of current which can flow through the charge circuit (108).

4. The battery of claim 3, further characterised in that the charge circuit (108), comprises a diode (110) and a variable resistor (112) connected in series, the resistance of the variable resistor (112) increasing in response to increased current flow through the charge circuit (108).

5. The battery of claims 1 to 4, further characterised in that the positive terminal (24) comprises the positive termination of the main battery (202), the negative terminal (26) comprises the negative termination of the reserve battery (204), and that the positive and negative terminals protrude from the cover (12) near respective corners thereof for connection with automotive battery cables and the negative termination (28) of the main battery (202) and the positive termination (32) of the reserve battery (204) are disposed in recessed positions within the cover (12).

6. The battery of claims 1 to 5, further characterised in that the cover (12) has an upwardly opening cavity (102) in which the switch (100) is removably mounted, the electrical connectors include a pair of bus bars (46, 50) which extend from their respective terminations (24, 32) to the cavity (102) in the cover (12) and are exposed therein, and the switch (100) includes a housing (62) which fits within the cavity (102), a manually operable actuator (78), and electrical contacts (64, 66, 74) for conducting current from one bus bar (46, 50) to the other when the switch (100) is in a closed position.

7. The battery of claim 1, further characterised in that the partition wall comprises a U-shaped partition wall (186) which parallels three sides of the container (14), so that one of the main and reserve batteries (172, 178) comprises a U-shaped series of cells disposed end-to-end outside of the partition wall (186), and the other comprises a series of cells disposed face-to-face within the partition wall (186), and the respective positive and negative terminations of the main and reserve batteries (174, 180) and (176, 182) are disposed proximate each other near the front corners of the dual battery (170).

8. The battery of claims 1 to 6, further characterised in that the partition wall (34) and main cell walls (36) span the side walls (7) of the container (14) in a widthwise direction, and each of the internal cell walls (40) defining the reserve cell compartments (42) extend in the lengthwise direction of the container (14) to one side of the partition wall (34) forming T-shaped junctures with the partition wall (34), whereby all of the reserve battery cell compartments (42) and battery elements (41) are substantially perpendicular to the main battery cell compartments (38) and battery elements (37).

9. The battery of claims 1 to 6, further characterised in that the plates (35, 31) of the reserve battery (204) have a lesser surface area than the plates (35, 31) of the main battery (202), and the main cell compartments (38) comprise a major portion of the volume of container (14), whereby the main battery (202) delivers more than 400 cold crank amps, and the reserve battery (204) delivers 200 to 400 cold crank amps.

10. The battery of claims 1 to 9, further characterised in that the main and reserve batteries (202, 204 or 172, 178) are lead-acid batteries.

## Patentansprüche

1. Doppelbatterie, welche beinhaltet: eine Hauptbatterie (202) und eine Reservebatterie (204), ein Paar positive und negative Pole (24, 26) für die Verbindung der Haupt- und der Reservebatterie (202, 204) mit einer externen Belastung und einen Schalter (100) für das Verbinden und Trennen der Reservebatterie (204) vom elektrischen Kontakt mit den Polen (24, 26), **dadurch gekennzeichnet,** daß:
die Haupt- und die Reservebatterie (202, 204) in einem länglichen Kunststoffbehälter (14) angeordnet sind, der eine Bodenwand (6), eine Vielzahl von Seitenwänden (7, 8), ein offenes oberes Ende, eine erste Reihe von in einem Abstand zueinander angeordneten inneren Zellwänden (36) für das Definieren einer Reihe von Hauptzellräumen (38), eine zweite Reihe von inneren Zellwänden (40) für das Definieren einer Reihe von Reservezellräumen (42) und eine Trennwand (34) hat, um die Hauptzellräume (38) von den Reservezellräumen (42) zu trennen;
ein Kunststoffdeckel (12) über das offene obere Ende des Behälters (14) paßt und daran befestigt ist;
eine Reihe von Hauptbatterieelementen (37), von denen jedes eine Vielzahl von Batterieplatten (35) beinhaltet, in jedem Hauptzellraum (38) angeordnet ist;
erste elektrische Verbindungslemente (39) zwischen den Zellen jedes der Hauptbatterieelemente (37) in Reihe schalten;
eine Reihe von Reservebatterieelementen (41), von denen jedes eine Vielzahl von Batterieplatten (31) beinhaltet, in jedem Reservezellraum (42) angeordnet ist;
zweite elektrische Verbindungselemente (33) zwischen den Zellen jedes der Reservebatterieelemente (41) in Reihe schalten;
ein Paar positive und negative Hauptanschlüsse (24, 28) in der Nähe gegenüberliegender Enden der Reihe von Hauptzellräumen (38) angeordnet ist;
ein Paar positive und negative Reserveanschlüsse (32, 26) in der Nähe gegenüberliegender Enden der Reihe von Reservezellräumen (42) angeordnet ist;
elektrische Verbindungselemente (46, 48, 50) die negativen Anschlüsse (28, 26) der Haupt- und der Reservebatterie (202, 204) mit der negativen Klemme (26) und die positiven Anschlüsse (24, 32) der Haupt- und der Reservebatterie mit der positiven Klemme (24) verbinden, wobei die elektrischen Verbindungselemente (46, 48, 50) innerhalb des Batteriedeckels (12) eingebettet sind; und
der Schalter (100) eines der elektrischen Verbindungselemente (46, 48, 50) selektiv unterbricht und an dem Batteriedeckel (12) angeordnet ist.

2. Batterie nach Anspruch 1, weiterhin **dadurch gekennzeichnet,** daß einige oder alle Reservebatteriezellräume (42) und Reservebatterieelemente (41) im wesentlichen senkrecht zu den Hauptbatteriezellräumen (38) und Hauptbatterieelementen (37) liegen.

3. Batterie nach Anspruch 1 und 2, welche weiterhin einen Ladestromkreis (108) umfaßt, der den Schalter (100) umgeht, um die Reservebatterie (204) gleichzeitig dann aufzuladen, wenn die Hauptbatterie (202) geladen wird, wenn der Schalter (100) offen ist, welcher eine Einrichtung (112) für die Begrenzung der Strommenge einschließt, welche durch den Ladestromkreis (108) fließen kann.

4. Batterie nach Anspruch 3, weiterhin **dadurch gekennzeichnet,** daß der Ladestromkreis (108) eine Diode (110) und einen variablen Widerstand (112) umfaßt, die in Reihe geschaltet sind, wobei der Widerstand des variablen Widerstands (112) als Reaktion auf einen erhöhten Stromfluß durch den Ladestromkreis (108) ansteigt.

5. Batterie nach Anspruch 1 bis 4, weiterhin **dadurch gekennzeichnet,** daß die positive Klemme (24) den positiven Anschluß der Hauptbatterie (202) umfaßt, die negative Klemme (26) den negativen Anschluß der Reservebatterie (204) umfaßt und daß die positive und die negative Klemme von dem Deckel in der Nähe entsprechender Ecken davon für eine Verbindung mit den Automobil-Batteriekabeln vorstehen und der negative Anschluß (28) der Hauptbatterie (202) und der positive Anschluß (32) der Reservebatterie in zurückspringender Stellung innerhalb des Deckels (12) angeordnet sind.

6. Batterie nach Anspruch 1 bis 5, weiterhin **dadurch gekennzeichnet,** daß der Deckel (12) einen sich nach oben öffnenden Hohlraum (102) hat, in welchem der Schalter (100) losnehmbar montiert ist, die elektrischen Verbindungselemente ein Paar Sammelschienen (46, 50) einschließen, welche sich von ihren entsprechenden Anschlüssen (24, 32) bis zu dem Hohlraum (102) in dem Deckel (12) erstrecken und darin freiliegend sind und der Schalter (100) ein Gehäuse (62), welches in den Hohlraum (102) paßt, ein manuell betätigbares Betätigungselement (78) und elektrische Kontakte (64, 66, 74) beinhaltet, um Strom von einer Sammelschiene (46, 50) zur anderen zu leiten, wenn sich der Schalter (100) in einer geschlossenen Stellung befindet.

7. Batterie nach Anspruch 1, weiterhin **dadurch gekennzeichnet,** daß die Trennwand eine U-förmige Trennwand (186) umfaßt, welche parallel zu drei Seiten des Behälters (14) liegt, so daß eine der Haupt- und Reservebatterie (172, 178) eine U-förmige Reihe von Zellen umfaßt, die Ende an Ende außerhalb der Trennwand (186) angeordnet sind und die andere eine Reihe von Zellen umfaßt, die Stirnseite gegen Stirnseite innerhalb der Trennwand (186) angeordnet sind und die positiven und negativen Anschlüsse der Haupt- und Reservebatterie (174,180) und (176, 182) dicht beieinander in der Nähe der vorderen Ecken der Doppelbatterie (170) angeordnet sind.

8. Batterie nach Anspruch 1 bis 6, weiterhin **dadurch gekennzeichnet,** daß die Trennwand (34) und die Hauptzellwände (36) die Seitenwände (7) des Behälters (14) in der Breitenrichtung überspannen und jede innere Zellwand (40), die die Zellräume (42) definiert, sich in der Längsrichtung des Behälters (14) zu einer Seite der Trennwand (34) erstreckt und T-förmige Stöße mit der Trennwand (34) bildet, wodurch alle Reservebatteriezellräume (42) und alle Batterieelemente (41) im wesentlichen senkrecht zu den Hauptbatteriezellräumen (38) und -Batterieelementen (37) liegen.

9. Batterie nach Anspruch 1 bis 6, weiterhin **dadurch gekennzeichnet,** daß die Platten (31) der Reservebatterie (204) eine geringere Oberfläche als die Platten (35) der Hauptbatterie (202) haben und die Hauptzellräume (38) einen größeren Teil des Behälters (14) umfassen, wodurch die Hauptbatterie (202) mehr als 400 Kaltstart-Ampere liefert und die Reservebatterie (204) 200 bis 400 Kaltstart-Ampere liefert.

10. Batterie nach Anspruch 1 bis 9, weiterhin **dadurch gekennzeichnet,** daß die Haupt- und die Reservebatterie (202, 204 oder 172, 178) Blei-Säure-Batterien sind.

## Revendications

1. Batterie double comprenant une batterie principale (202) et une batterie de secours (204), une paire de bornes positive et négative (24, 26) pour le raccordement des batteries principale et de secours (202, 204) à une charge externe et un interrupteur (100) pour connecter ou déconnecter la batterie de secours (204) d'un contact électrique avec les bornes (24, 26),
batterie caractérisée en ce que :
- les batteries principale et de secours (202, 204) sont placées dans un récipient allongé en matière plastique (14) possédant une paroi de fond (6), une pluralité de parois latérales (7, 8), une extrémité supérieure ouverte, une première série de parois espacées de cellule interne (36) pour la définition d'une série de compartiments de cellule principale (38), une seconde série de parois de cellule interne (40) pour définir une série de compartiments de cellule interne (42) et une paroi de séparation (34) pour isoler les compartiments de la cellule principale (38) des compartiment de la cellule de secours (42);
- un couvercle en matière plastique (12) s'adapte sur et est fixé à l'extrémité supérieure ouverte du récipient (14);
- une série d'éléments de batterie principale (37) comprenant chacun une pluralité de plaques de batterie (35, 31) sont disposés dans chacun des compartiments de cellule principale (38);
- des premiers connecteurs électriques inter-cellule (39) relient en série chacun des éléments de la batterie principale (37);
- une série d'éléments de batterie de secours (41) comprenant chacun une pluralité de plaques de batterie (35, 31) sont placés dans chacun des compartiments de cellule de secours (42);
- des seconds connecteurs électriques inter-cellule (33) relient en série chacun des éléments de la batterie de secours (41);
- une paire principale de terminaison positive et négative (24, 28) sont placées près des extrémités opposées de la série des compartiments de cellule principale (38);
- une paire de secours de terminaisons positive et négative (32, 26) sont placées près des extrémités opposées de la série de compartiments de cellule de secours (42);
- des connecteurs électriques (46, 48, 50) raccordent les terminaisons négatives (28, 26) des batteries principale et de secours (202, 204) à la borne négative (26) et les terminaisons positives (24, 32) des batteries principale et de secours à la borne positive (24), les connecteurs électriques (46, 48, 50) étant noyés dans le couvercle de batterie (12); et
- l'interrupteur (100) interrompt sélectivement un des connecteurs électriques (46, 48, 50) et est placé sur le couvercle de batterie (12).

2. Batterie selon la revendication 1, caractérisée, de plus, en ce que certains ou tous les compartiments de cellule de la batterie de secours (42) et les éléments de la batterie de secours (41) sont globalement perpendiculaires aux compartiments de cellule de la batterie principale (38) et aux éléments de la batterie principale (37).

3. Batterie selon les revendications 1 et 2, comprenant de plus un circuit de charge (108) dérivant l'interrupteur (100) pour la charge de la batterie de secours (204) en même temps que la batterie principale (202) est chargée lorsque l'interrupteur (100) est ouvert, circuit comprenant un dispositif (112) pour la limitation de la quantité de courant pouvant traverser le circuit de charge (108).

4. Batterie selon la revendication 3, caractérisée, de plus, en ce que le circuit de charge (108) comprend une diode (110) et une résistance variable (112) montées en série, la valeur de la résistance variable (112) augmentant en réponse à un courant accru traversant le circuit de charge (108).

5. Batterie selon les revendications 1 à 4, caractérisée, de plus, en ce que la borne positive (24) comprend la terminaison positive de la batterie principale (202), en ce que la borne négative (26) comprend la terminaison négative de la batterie de secours (204) et en ce que les bornes positive et négative dépassent du couvercle (12) près de ses coins respectifs pour un raccordement aux câbles de batterie d'automobile et la terminaison négative (28) de la batterie principale (202) et la terminaison positive (32) de la batterie de secours (204) sont placées dans des positions en creux à l'intérieur du couvercle (12).

6. Batterie selon les revendications 1 à 5, caractérisée, de plus, en ce que le couvercle (12) possède une cavité débouchant vers le haut (102) dans laquelle l'interrupteur (100) est monté amovible, en ce que les connecteurs électriques comprennent une paire de barrettes de raccordement (46, 50) s'étendant de leurs terminaisons respectives (24, 32) vers la cavité (102) du couvercle (12) et y sont exposées et en ce que l'interrupteur (100) comprend un logement (62) s'adaptant dans la cavité (108), un actionneur manuel (78) et des contacts électriques (64, 66, 74) pour conduire le courant de l'une des barrettes de raccordement (46, 50) à l'autre lorsque l'interrupteur (100) est en position fermée.

7. Batterie selon la revendication 1, caractérisée, de plus, en ce que la paroi de séparation comprend une paroi de séparation en forme de U (186) qui est parallèle à trois côtés du récipient (14) de façon à ce qu'une des batteries principale et de secours (172, 178) comprenne une série en forme de U de cellules disposées bout-à-bout à l'extérieur de la paroi de séparation (186) et de façon à ce que l'autre comprenne une série de cellules disposées face-à-face dans la paroi de séparation (186) et en ce que les terminaisons respectives positive et négative des batteries principale et de secours (174, 180) et (176, 182) sont disposées proches l'une de l'autre près des coins avant de la batterie double (170).

8. Batterie selon les revendications 1 à 6, caractérisée, de plus, en ce que la paroi de séparation (34) et les parois de cellule principale (36) enjambent les parois latérales (7) du récipient (14) dans le sens de la largeur et en ce que chacune des parois internes de cellule (40), définissant les compartiments de cellule de secours (42), s'étendent dans le sens de la longueur du récipient (14) vers un côté de la paroi de séparation (34) formant des jonctions en forme de T avec la paroi de séparation (34), tous les compartiments de cellule de batterie de secours (42) et les éléments de batterie (41) étant ainsi globalement perpendiculaires aux compartiments de cellule de batterie principale (38) et aux éléments de batterie (37).

9. Batterie selon les revendications 1 à 6, caractérisée, de plus, en ce que les plaques (35, 31) de la batterie de secours (204) ont une section inférieure à celle des plaques (35, 31) de la batterie principale (202) et en ce que les compartiments de cellule principale (38) occupent une majeure partie du volume du récipient (14), la batterie principale (202) délivrant ainsi plus de 400 ampères de démarrage à froid et la batterie de secours (204) délivrant 200 à 400 ampères de démarrage à froid.

10. Batterie selon les revendications 1 à 9, caractérisée, de plus, en ce que les batteries principale et de secours (202, 204 ou 172, 178) sont des batteries au plomb.
